# EUROPÄISCHE PATENTSCHRIFT

(11) **EP 0 928 120 B1**
(45) Veröffentlichungstag und Bekanntmachung des Hinweises auf die Patenterteilung: **12.11.2003**
(21) Anmeldenummer: 98117377.6
(22) Anmeldetag: 14.09.1998
(51) Int. Cl.: H04Q 7/38

(54) **Verwaltung der Erreichbarkeit eines Endgerätes in einem Mobilfunknetz und einem intelligenten Netz**
Accessibility management of a terminal in a mobile radio network and in a intelligent network.
Gestion de l'accessibilité d'u terminal dans un réseau radio mobile et dans un réseau intelligent.

(30) Priorität: 29.09.1997 DE 19742996
(43) Veröffentlichungstag der Anmeldung: 07.07.1999
(73) Patentinhaber: SIEMENS AKTIENGESELLSCHAFT, 80333 München (DE)
(72) Erfinder: Rau, Helmut, 82110 Germering (DE); Becher, Reinhard, Dr., 81245 München (DE)

(56) Entgegenhaltungen:
- EP-A- 0 700 227
- EP-A- 0 893 933
- EP-A- 0 909 104
- WO-A-97/01918

## Beschreibung

Die Erfindung betrifft ein Verfahren zur Verwaltung der Erreichbarkeit eines Teilnehmers in einem Telekommunikationssystem, bei welchem zwischen einem öffentlichen Mobilfunknetz und einem weiteren, intelligenten Netz über eine Schnittstelle Kommunikationsverbindungen herstellbar und in dem Mobilfunknetz ein Heimatregister zur Speicherung von Erreichbarkeitsinformationen betreffend den Teilnehmer sowie in dem intelligenten Netz eine Dienststeuerstation für die Steuerung von Diensten im intelligenten Netz einschließlich des Setzens und Überwachens von Anrufumleitungen vorgesehen sind, wobei ein von dem Teilnehmer genutztes Endgerät sich in das Mobilfunknetz oder in das intelligenten Netz einbucht.

Weiters betrifft die Erfindung ein Telekommunikationssystem, bei welchem zwischen einem öffentlichen Mobilfunknetz und einem weiteren, intelligenten Netz über eine Schnittstelle Kommunikationsverbindungen herstellbar und in dem Mobilfunknetz ein Heimatregister zur Speicherung von Erreichbarkeitsinformationen betreffend den Teilnehmer sowie in dem intelligenten Netz eine Dienststeuerstation für die Steuerung von Diensten im intelligenten Netz einschließlich des Setzens und Überwachens von Anrufumleitungen vorgesehen sind, wobei ein von dem Teilnehmer genutztes Endgerät dazu eingerichtet ist, sich in das Mobilfunknetz oder in das intelligenten Netz einzubuchen.

WO 97/01918 betrifft ein Verfahren zur Ortsbestimmung eines Teilnehmers eines intelligenten Netzwerks in welchem die Erreichbarkeitsinformationen in einer Datenbank gespeichert werden.

EP 0700227 A2 betrifft ein "multi mode" Mobil-Endgerät, das in mindestens zwei mobilen Kommunikationsnetzwerken, wie z. B. einem schnurlosen und einem zellularen Netzwerk, agieren kann und die Anrufe über ein bestimmtes Netzwerk zu dem gerade verwendeten Netzwerk weiterleitet.

Ist es einem Teilnehmer, welcher beispielsweise ein Mehrbetriebsmobilteil wie etwa ein sogenanntes "Dual-Mode Handy" für GSM- und DECT-Betrieb besitzt, möglich, sich mit seinem Endgerät in den Einzugsbereichen verschiedener Netze aufzuhalten, so erhält er üblicherweise für jedes dieser Netze eine eigene Rufnummer, beispielsweise eine GSM-Rufnummer und eine Rufnummer für einen drahtlos, nämlich mittels einer DECT-Luftschnittstelle, realisierten Teilnehmeranschluß in einem ISDN-Netz. Der Teilnehmer ist gewöhnlich lediglich in einem Netz aktiv. Damit ist er dann auch nur unter der in diesem Netz gültigen Rufnummer direkt erreichbar. Für den Fall, daß der Teilnehmer, auch wenn er unter der Rufnummer eines anderen Netzes angerufen wird, erreichbar sein soll, wird bisher eine Anrufumleitung zu dem Netz, in dem der Teilnehmer aktiv ist, durchgeführt.

Im Rahmen der Erfindung sollen öffentliche Telekommunikationsnetze betrachtet werden. Telekommunikationsnetze sind als Festnetze oder Mobilnetze, wie das bekannte GSM-Netz (Global System for Mobile communications) ausgebildet und weisen untereinander vernetzte Vermittlungseinrichtungen auf.

In einem sogenannten intelligenten Netz (IN oder ISDN, Integrated Services Digital Network) werden zusätzlich zu dem Grunddienst des Telekommunikationsnetzes den Teilnehmern des Netzes Zusatzdienste angeboten, wie z.B. ein Nummerumwertedienst zum Einrichten von Kurznummern oder ein Dienst der Anruferkontrolle (control of user), durch den der Teilnehmer nur für ausgewählte Anrufer erreichbar ist. Für die Durchführung dieser Dienste ist wie bekannt in dem intelligenten Netz eine Dienststeuerstation vorgesehen, die im allgemeinen von den Vermittlungseinrichtungen des intelligenten Netzes verschieden ist.

In Mobilfunknetzen sind an die Vermittlungseinrichtungen jeweils Basisstationen angeschlossen, mit deren Hilfe über eine Luftschnittstelle Telekommunikationsendgeräte anschließbar sind. Diese Endgeräte ermöglichen einem Teilnehmer eines Mobilnetzes den Netzzugang. Die Vermittlungseinrichtungen sind darüber hinaus auch für den Übergang zu weiteren Netzen, z.B. einem Datenübertragungsnetz oder einem Festnetz, eingerichtet.

Aus dem GSM-Mobilfunknetz ist es weiters bekannt, innerhalb eines Mobilnetzes Speichereinheiten, in denen jeweils teilnehmerspezifische Daten zu den netzeigenen Diensten gespeichert sind, zu verwenden. Eine dieser Speichereinheiten realisiert das sogenannte Heimatregister (HLR, Home Location Register), das sich in der Regel an einem fest definierten Ort befindet und in dem die der Registrierung des Teilnehmers zugrundeliegenden Daten abgelegt sind. Für den mobilen Teilnehmer und der mit ihm in Verbindung stehenden Basisstation ist eine Speichereinheit als sogenanntes Besucherregister (VLR, Visiting Location Register), in dem sich die Teilnehmer- und Verbindungs-spezifischen Daten befinden, vorgesehen. Je nach Aufenthaltsort des mobilen Teilnehmers ändert sich auch die Speichereinheit für das Besucherregister.

Damit besteht für einen Teilnehmer eines Mobilnetzes die Möglichkeit zu "roamen", d.h. zwischen Zellen, also Einzugsbereichen der Basisstationen, unter Umständen auch während eines Gespräches zu wechseln. Der Wechsel zwischen den Zellen wird, wie bei dem Beispiel GSM-Netz bekannt, durch hierfür eingerichtete Protokolle gewährleistet, über die die Teilnehmerdaten beispielsweise zwischen einem dem Teilnehmer fest zugeordneten Heimatregister und dem Besuchsregister der jeweils aktuellen Zelle ausgetauscht werden.

Für die Kommunikation zwischen den Vermittlungseinheiten werden zur Zeit verschiedene Protokolle eingesetzt, so etwa INAP-Protokolle (Intelligent Network Application Part) der Europäischen Normeninstituts für Telekommunikation (ETSI) oder das MAP-Protokoll (Mobile Application Part) des GSM-Standards. Diese Protokolle werden üblicherweise netzintern verwendet. Weiterhin ist aus den ETSI-Spezifikationen GSM 03.78, und GSM 09.02, eine sogenannte CAMEL Plattform (Customized Application for Mobile network Enhanced Logic) bekannt, mit der die Unterstützung von zusätzlichen anbieterspezifischen Diensten für Teilnehmer ermöglicht werden soll. Der CAMEL-Standard legt hierfür ein CAP-Protokoll (CAMEL Application Part fest, innerhalb dessen Signalisierungsmeldungen zwischen dem Heimatregister und einer Dienststeuerstation austauschbar sind.

Ein Wechsel des Teilnehmeraufenthaltes zwischen Telekommunikationsnetzen kann nicht ohne weiteres nach dem Vorbild des Wechsels zwischen den Zellen eines zellularen Funknetzes durchgeführt werden, da zum einen die Telekommunikationsnetze jeweils für sich vollständig, im wesentlichen unabhängig und somit zueinander prinzipiell gleichberechtigt sind - zumindest hinsichtlich der Verwaltung der Teilnehmerdaten -, zum anderen im allgemeinen verschiedene Architekturen und Protokolle aufweisen.

Die Anrufumleitung zwischen Telekommunikationsnetzen ist daher mit unter Umständen sehr hohem Aufwand der Gesprächsumleitung verbunden, sowohl hinsichtlich der belegten Verbindungsleitungen bzw. -kanäle als auch bei dem Gesprächsaufbau, was sich auch in zum Teil störend langen Gesprächsaufbauzeiten bemerkbar macht. Dies gilt besonders, wenn wie bei zellularen Netzen die Teilnehmerdaten zumindest teilweise dezentralisiert sind. Außerdem muß der Teilnehmer meist selbst immer wieder in die Verwaltung der Anrufumleitung eingreifen, damit die Erreichbarkeit im gewünschten Ausmaß gewährleistet bleibt.

Die deutsche Patentanmeldung 19 618 531.9 lehrt die Verwaltung von Anrufumleitungen aus einem Mobilfunknetz in eine Nebenstellenanlage, die als privates Netz an das Mobilfunknetz angebunden ist. Befindet sich der Teilnehmer im Bereich einer Nebenstelleneinrichtung, wird seitens des Mobilfunknetzes eine Aufenthaltsinformation gespeichert, die angibt, wie der Teilnehmer über die Nebenstelleneinrichtung erreichbar ist; ein für den Teilnehmer im Mobilfunknetz ankommender Anruf wird mittels dieser Aufenthaltsinformation zu dem privaten Netz umgeleitet. Bucht sich der Teilnehmer im Mobilfunknetz ein, so wird eine Aufenthaltsinformation der Nebenstelleneinrichtung gesendet, die die Erreichbarkeit des Teilnehmers überprüft und die eigene Aufenthaltsinformation gegebenenfalls löscht. Dieses Verfahren ist jedoch einseitig, da eine Anrufumleitung in umgekehrter Richtung zu dem Mobilfunknetz nicht vorgesehen ist, und nützt die einem intelligenten Netz zukommenden Möglichkeiten nicht aus.

Es ist daher Aufgabe der Erfindung, die Erreichbarkeit eines Teilnehmers über sein Endgerät auch dann zu sichern, wenn der Teilnehmer zwischen Telekommunikationsnetzen wie intelligenten Netzen und Mobilfunknetzen wechselt, wobei Anrufumleitungen in alle beteiligten Netze ausführbar sein sollen der Verwaltungs- und Durchführungsaufwand für die gegebenenfalls notwendigen Rufumleitungen möglichst gering gehalten werden soll.

Diese Aufgabe wird ausgehend von einem Verfahren der eingangs beschriebenen Art durch ein Verfahren gelöst, bei welchem nach dem Einbuchen in das Mobilfunknetz eine Erreichbarkeitsmeldung, welche die Erreichbarkeit des Teilnehmers in dem jeweiligen Netz anzeigt, zwischen dem Heimatregister und der Dienststeuerstation ausgetauscht wird, sowie auf eine Erreichbarkeitsmeldung betreffend die Teilnehmererreichbarkeit in dem Mobilfunknetz hin die Dienststeuerstation den Teilnehmer als über das Mobilfunknetz erreichbar kennzeichnet und für Anrufe, die in dem intelligenten Netz für den Teilnehmer ankommen, in Abhängigkeit von der Erreichbarkeitsmeldung Anrufumleitwege zu dem Mobilfunknetz setzt, bzw. auf eine Erreichbarkeitsmeldung betreffend die Teilnehmererreichbarkeit in dem intelligenten Netz in dem Heimatregister eine entsprechende Erreichbarkeitsinformation gesetzt wird.

Diese Lösung erbringt den Vorteil, daß die beteiligten Netze jederzeit den aktuellen Stand der Erreichbarkeit des Teilnehmers halten, sowie die Anrufumleitungen optimiert werden können, da bei der Herstellung einer Verbindung zu dem Teilnehmer dessen Standort nun frühzeitig bekannt ist.

Eine besonders vorteilhafte Ausführungsform der Erfindung zeichnet sich dadurch aus, daß auf das Einlangen einer Erreichbarkeitsmeldung bei der Dienststeuerstation hin Kennzeichnungen des Endgerätes als in dem intelligenten Netz erreichbar gelöscht werden. Dies erbringt eine Vereinfachung der Verwaltung der Teilnehmererreichbarkeit und der zugehörigen Anrufumleitungen; außerdem vermeidet dies gegebenenfalls überflüssige oder sogar obsolete Aufenthaltseinträge in dem Telekommunikationsnetz.

Aus den gleichen Gründen ist ebenso vorteilhaft, wenn auf das Einlangen einer Erreichbarkeitsmeldung bei dem Heimatregister hin Einträge betreffend den Teilnehmer in Besucherregistern des Mobilfunknetzes gelöscht werden.

Ferner ist es günstig, wenn in dem intelligenten Netz Teilnehmerendanschlüsse zumindest zum Teil mit Hilfe von Schnurlostelefon-Verbindungen, insbesondere DECT-Verbindungen, realisiert werden. Dies ermöglicht z.B. den Einsatz eines Dual-Mode Handy und erhöht die Mobilität des Teilnehmers.

Eine weitere bevorzugte Variante verringert den Signalisierungs- und Verbindungsaufwand in den beteiligten Telekommunikationsnetzen dadurch, daß in den Netzen bereits bestehende Erreichbarkeitsinformationen und/oder Anrufumleitwege, die durch die Aktualisierung überholt wurden, gelöscht werden.

Es ist darüber hinaus für den Teilnehmer komfortabel sowie gegebenenfalls kostensparend, wenn das Endgerät in regelmäßigen Zeitabständen überprüft, in welchem Netz-Einzugsgebiet es sich befindet, und nach vorgebbaren Kriterien auf der Grundlage des Ergebnisses der Überprüfung sowie gegebenenfalls zusätzlicher Information, z.B. der Uhrzeit, entscheidet, ob und in welches Netz es sich einbuchen soll.

In einer weiteren bevorzugte Ausführungsform, die sich durch die einfache technische Realisierbarkeit der Erfindung auszeichnet, werden die Erreichbarkeitsmeldungen über eine Schnittstelle zwischen dem Heimatregister und der Dienststeuerstation ausgetauscht.

Die weiter oben dargestellte Aufgabe wird darüber hinaus ausgehend von einem Telekommunikationssystem der eingangs beschriebenen Art mittels eines Telekommunikationssystems gelöst, bei welchem zwischen dem Heimatregister und der Dienststeuerstation Erreichbarkeitsmeldungen, welche die Erreichbarkeit des Teilnehmers in einem der Netze anzeigt, übermittelbar sind, sowie die Dienststeuerstation dazu eingerichtet ist, in dem intelligenten Netz auf eine Erreichbarkeitsmeldung betreffend die Teilnehmerreichbarkeit in dem Mobilfunknetz hin für Anrufe, die in dem intelligenten Netz für den Teilnehmer ankommen, in Abhängigkeit von der Erreichbarkeitsmeldung Anrufumleitwege zu dem Mobilfunknetz zu setzen, und das Heimatregister dazu eingerichtet ist, auf eine Erreichbarkeitsmeldung betreffend die Teilnehmererreichbarkeit in dem intelligenten Netz eine entsprechende Erreichbarkeitsinformation zu setzen.

In einer bevorzugte Ausführungsform des erfindungsgemäßen Telekommunikationssystemes, welche sich durch die einfache technische Realisierbarkeit der Erfindung auszeichnet, ist zwischen dem Heimatregister und der Dienststeuerstation eine Schnittstelle vorgesehen, über die Erreichbarkeitsmeldungen austauschbar sind.

Weiters ist es vorteilhaft aus weiter oben genannten Gründen, wenn in dem intelligenten Netz zumindest ein Teil der Teilnehmerendanschlüsse Schnurlostelefon-Verbindungen, insbesondere DECT-Verbindungen, sind.

Eine günstige Ausführungsform eines Endgerätes für ein erfindungsgemäßes Telekommunikationssystem ist ferner zum Betrieb in zwei oder mehr unterschiedlichen Telekommunikationssystemen eingerichtet ist.

Hierbei ergeben sich weitere Vorteile hinsichtlich Benutzerkomfort und Kostenersparnis, wenn das Endgerät dazu eingerichtet ist, in regelmäßigen Zeitabständen zu überprüfen, in welchem Netz-Einzugsgebiet es sich befindet, und nach vorgebbaren Kriterien auf der Grundlage des Ergebnisses der Überprüfung sowie gegebenenfalls zusätzlicher Information, z.B. der Uhrzeit, eine Netz-Einbuchung auszulösen.

Die Erfindung wird samt weiteren Vorzügen im folgenden unter Zuhilfenahme der beigelegten Figuren näher erläutert, die sich auf beispielhafte Ausführungsformen der Erfindung beziehen. Es zeigen
Fig. 1 eine symbolische Darstellung eines GSM-Netzes und eines intelligenten Festnetzes, zwischen denen ein Mobilteil wechseln kann, mit ihren wesentlichen Komponenten, und
Fig. 2 das Telekommunikationssystem der Fig. 1, bei dem in das Festnetz ein privates Netz eingegliedert ist.

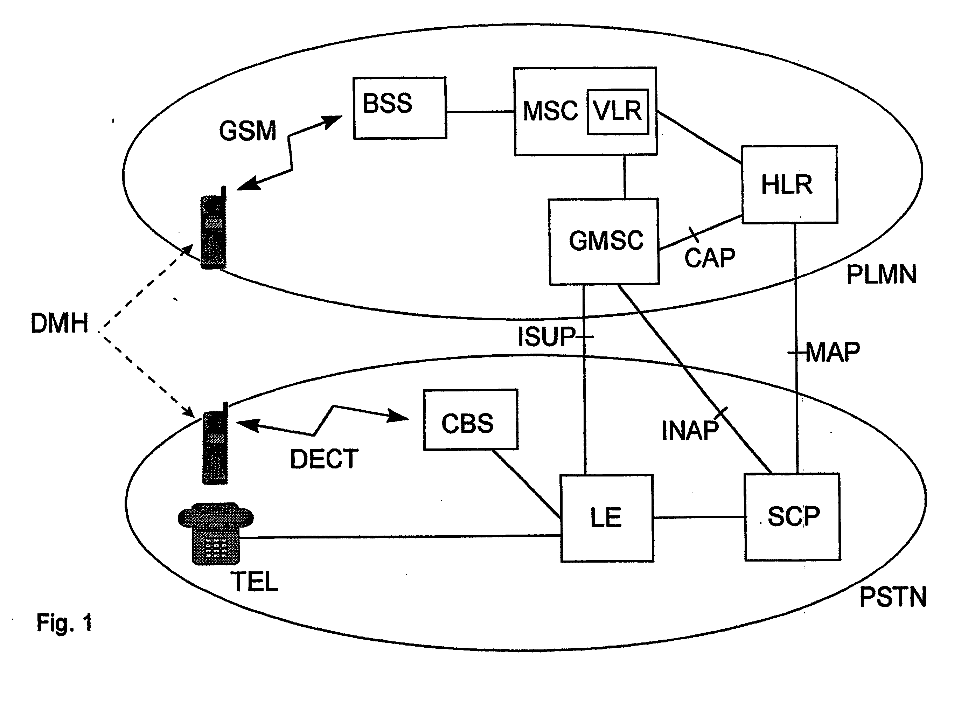

Das in Fig. 1 gezeigte Ausführungsbeispiel geht davon aus, daß das Endgerät DMH des Teilnehmers ein "Dual-Mode Handy" ist, das einerseits über ein öffentliches GSM-Netz PLMN (Public Line Mobile Network), andererseits über einen sogenannten CTM-Dienst (Cordless Terminal Mobility) in einem intelligenten Festnetz PSTN kommunizieren kann. Auf seiten des GSM-Netzes zeigt Fig. 1 das Heimatregister HLR, das dem Mobilteil in seiner Betriebsart als GSM-Handy zugeordnet ist, und eine Vermittlungseinrichtung MSC (Mobile Switching Center) mit einer ihr zugeordneten Basisstation BSC, in deren Einzugsbereich sich das Endgerät DMH momentan aufhält. Eine Verbindung zu dem Endgerät DMH stellt die Vermittlungseinrichtung MSC über eine drahtgebundene Verbindung zu der Basisstation BSC, und von letzterem zu dem Endgerät DMH über eine GSM-Luftschnittstelle her, und richtet hierzu weiters ein Besucherregister VLR ein.

In dem intelligenten Netz PSTN (Public Service Telecommunication Network) ist das Endgerät DMH des Teilnehmers in seiner Betriebsart als Schnurlos-Mobilteil, z.B. nach dem DECT-Standard (Digital Enhanced Cordless Telephone) des ETSI, erreichbar. Das Schnurlos-Mobilteil DMH tritt über eine Luftfunkstrecke mit der Schnurlos-Feststation CBS in Verbindung. Die Feststation CBS ist ihrerseits drahtgebunden mit einem Ortsamt LE eines Festnetzes PSTN verbunden, in dem das Endgerät DMH als vollgültige Teilnehmerendstelle gleich einem herkömmlichen Telefon TEL geführt wird. Das Schnurlos-Mobilteil kann beispielsweise in einem drahtlosen Endverteilernetz (WLL, Wireless Local Loop) mit einer fest vorgegebenen Feststation oder innerhalb eines CTM-Bereiches mit einer Anzahl von Feststationen in einem Basisstationen-Subsystem über die Luftschnittstelle in Verbindung stehen. Eine detailliertere Darstellung der schnurlosen Anbindung eines Endgerätes DMH an ein intelligentes Netz zur Verbesserung der Mobilität des Teilnehmers ist für die vorliegende Erfindungn nicht notwendig und allgemein bekannt.

Für die Verwaltung von netzeigenen Diensten sowie der anschlußbezogenen Teilnehmerdaten weist das Festnetz PSTN eine Dienststeuerstation SCP auf. Auch die Verwaltung von Rufumleitungen wird in der Dienststeuerstation SCP durchgeführt. Die Dienststeuerstation SCP und das GSM-Heimatregister HRL entsprechen einander somit in funktioneller Hinsicht als zentrale Datenbasen der Telekommunikationsnetze. Neben der Dienststeuerstation SCP können in dem intelligenten Netz PSTN weitere, in Fig. 1 nicht gezeigte, untergeordnete Dienststationen vorgesehen sein, die jeweils in einem festgelegten Netzbereich oder in einem dem intelligenten Netz PSTN untergeordneten Telekommunikationsnetz lokale Aufgaben erfüllen.

Zum Zwecke der Vernetzung zwischen dem GSM-Netz PLMN und dem Festnetz PSTN ist zwischen einer als Übergangsvermittlung GMSC (Gateway MSC) eingerichteten Vermittlungseinrichtung des GSM-Netzes und eines Übergangsamtes des Festnetzes eine Schnittstelle ISUP vorgesehen, über die Verbindungen über die Netzgrenzen hinweg herstellbar sind. Da die Topologie des Festnetzes PSTN naturgemäß festgelegt ist, kann hier die Unterscheidung zwischen dem Übergangsamt und dem Ortsamt LE, an das das Privatnetz CN angeschlossen ist, fallengelassen und beide Ämter miteinander identifiziert werden. Seitens des GSM-Netzes PLMN ist die entsprechende Identifikation nicht möglich, da schon die Identität der Besucherregister-Vermittlungseinrichtung MSC wechseln kann.

Es sei an dieser Stelle darauf hingewiesen, daß die Netze PSTN, PLMN voneinander prinzipiell unabhängig sind ungeachtet der Netz-Verknüpfungen untereinander. Insbesondere kann dem Endgerät in jedem der Telekommunikationsnetze jeweils eine eigene Rufnummern zugeordnet sein, die in einem öffentlichen Festnetz PSTN als ISDN-Nummer, in einem GSM-Netz PLMN als MSISDN-Nummer (Mobile Station international ISDN) bezeichnet wird.

Die Erfindung sieht nun vor, daß im Falle des Einbuchens des Gerätes DMH in eines der Netze, für die es als Endgerät eingerichtet ist, also hier das GSM-Netz PLMN oder das intelligente Netz PSTN, zwischen den Datenbasen der Netze PLMN, PSTN Erreichbarkeitsmeldungen ausgetauscht und anhand dieser Erreichbarkeitsmeldungen innerhalb jedes Netzes Anrufumleitungen zu dem Endgerät DMH aktiviert werden. Hierzu kann günstigerweise eine zusätzliche Schnittstelle MAP zwischen dem Heimatregister HLR des GSM-Netzes PLMN und der Dienststeuerstation SCP des Festnetzes PSTN verwendet werden, wobei wiederum die Meldungen über diese Schnittstelle vorteilhafterweise im Rahmen des oben erwähnten MAP-Protokolls (Mobile Application Part) ausgetauscht werden. Diese Schnittstelle muß nicht unmittelbar zwischen dem Heimatregister HLR und der Dienststeuerstation SCP eingerichtet sein, sondern kann unter Einbeziehung von Vermittlungsstellen eingerichtet sein, z.B. wie in Fig. 1 dargestellt über die Übergangsvermittlung GMSC.

Wenn sich beispielsweise das Endgerät DMH in das GSM-Netz PLMN einbucht, sendet es wie für das GSM-Netz bekannt ein Einbuchungssignal an die Basisstation BSC. Die Basisstation reicht das Einbuchungssignal als ein sogenanntes 'Location Update' (Standort-Auffrischungsmeldung) an ihre Vermittlungseinrichtung MSC weiter. Diese legt einen Eintrag für das Endgerät in ihrem Besucherregister VLR an und leitet das Location Update an das Heimatregister HLR weiter, das die Standortinformation des GSM-Teilnehmers DMH setzt. Gemäß der Erfindung sendet nun das Heimatregister HLR die Erreichbarkeitsinformation an die Datenbasis des anderen Telekommunikationsnetzes. Dies erfolgt mittels eines Location Update über die Übergangsvermittlung GMSC an die Dienststeuerstation SCP. Letztere trägt das Endgerät als über das GSM-Netz unter der MSISDN-Nummer erreichbar ein. Gegebenenfalls leitet die Dienststeuerstation SCP noch die Aufenthaltsinformation an untergeordnete Dienststationen des intelligenten Netzes weiter.

Im Falle eines Anrufes, der seitens des Festnetzes PSTN für den Privatnetz-Teilnehmer DMH einlangt kann nun die Verbindung aufgrund des Anrufumleitungsmerkmales von dem Ortsamt LE sofort zu der MSISDN-Nummer des Funknetzes PLMN umgeleitet werden. Hierbei entfallen seitens des intelligenten Netzes PSTN etwaige Rufversuche, also sogenanntes Paging, über die Feststationen CBS, in deren Bereich das Endgerät DMH des Teilnehmers sich befinden könnte, was sich in einem schnelleren Gesprächsaufbau vorteilhaft auswirkt. Bisher dagegen würde mangels einer entsprechenden Erreichbarkeitsinformation von der Vermittlung LE des Festnetzes PSTN zuerst versucht, den Teilnehmer über eine Schnurlosverbindung zu erreichen, und erst nach erfolglosem Paging die Verbindung über die MSISDN-Nummer zu dem GSM-Netz umgeleitet. Dies ist mit unnötigerweise belegten Verbindungsleitungen und merkbarem Zeitaufwand bis in den Bereich von Minuten verbunden, was durch die Erfindung nunmehr entfällt.

Wechselt das Endgerät DMH dagegen in den Einzugsbereich des intelligenten Netzes PSTN über und bucht sich dort ein, geschieht dies seitens des Endgerätes nach bekannter Weise über die im DECT-Standard vorgesehene Anforderungsmeldung, und über die Feststation CBS wird die entsprechende Standortinformation innerhalb des intelligenten Netzes PSTN an die Dienststeuerstation SCP weitergeleitet. Die Dienststeuerstation SCP löscht erfindungsgemäß eine eventuell bestehende Anrufumleitung zu einem anderen Netz, also in diesem Fall die Umleitung auf die MSISDN-Nummer, und kennzeichnet das Endgerät als netzintern erreichbar. Weiters sendet die Station SCP über die MAP-Schnittstelle eine Anforderung zur Standortauffrischung an das Heimatregister HLR im GSM-Netz PLMN. Das Heimatregister HLR kennzeichnet das Endgerät als über das Festnetz PSTN erreichbar, z.B. dadurch daß die Standortinformation in dem Heimatregister HLR anstelle einer Vermittlungseinrichtung MSC bzw. eines Besucherregisters VLR auf die Dienststeuerstation SCP des Festnetzes PSTN gesetzt wird. Im Heimatregister HLR wird dazu zweckmäßigerweise eine CAMEL Subscription Information (SI) für ankommende Rufe als aktiv gekennzeichnet.

Zusätzlich sendet das Heimatregister HLR einen 'Cancel Location'-Befehl zur Löschung der Aufenthaltsinformation zu dem Besucherregister VLR, bei dem der Teilnehmer DMH zuletzt eingetragen war. Dies ist erforderlich, damit bei einem Wiedereinbuchen des Teilnehmers DMH in das GSM-Netz PLMN in jedem Fall ein Location Update an das Heimatregister HLR gesendet wird und der Teilnehmer in dem GSM-Netz nicht mehrfach als eingebucht behandelt wird.

Ein in dem GSM-Netz PLMN einlangender Anruf für das Endgerät DMH unter der MSISDN-Nummer löst nun wie bisher bekannt eine Standortanfrage der betreffenden Vermittlungsstation MSC an das Heimatregister HLR aus. Da inzwischen die Standortinformation hinsichtlich des GSM-Netzes gelöscht worden ist, unterbleibt ein etwaiges Paging zu dem Endgerät DMH; vielmehr veranlaßt das Heimatregister HLR aufgrund des Standortverweises zu der Festnetz-Station SCP die Übergangsvermittlung GMSC, eine Verbindung über das Festnetz PSTN aufzubauen. Dazu wird seitens der Übergangsvermittlung GMSC eine Anfrage an die Dienststeuerstation SCP hinsichtlich der Erreichbarkeit des Teilnehmers DMH durchgeführt und aufgrund dieser Anfrage erfolgt der weitere Gesprächsaufbau entsprechend der ISDN-Rufnummer über das Festnetz PSTN und das Ortsamt LE. Wieder macht sich hierbei vorteilhaft bemerkbar, daß das GSM-Netz frühzeitig über den Standortwechsel des Endgerätes informiert wird, sodaß die Gesprächsverbindung ohne eine Umleitung über die bisherige Besucher-Vermittlungsstelle MSC, VLR und ohne etwaiges Paging zeitsparend ausführbar ist.

Falls der in dem GSM-Netz PLMN hereinkommende Anruf sich auf die ISDN-Nummer des Teilnehmers DMH bezieht, kann zufolge der Erfindung eine Abfrage der Dienststeuerstation SCP durch die Übergangsvermittlung GMSC stattfinden. Vorteilhaft hierfür ist eine entsprechende Gestaltung der ISDN-Nummer beispielsweise derart, daß sie sich in führenden Ziffern von gewöhnlichen, d.h. nicht erfindungsgemäß umleitbaren Rufnummern des intelligenten Netzes PSTN unterscheidet. Eine Anfrage bei dem Heimatregister HLR entfällt, was sich in geringerem Signalisierungsaufwand vorteilhaft auswirkt. Wenn dagegen das Endgerät DMH innerhalb des GSM-Netzes PLMN erreichbar ist, so kann die Dienststeuerstation SCP erfindungsgemäß aufgrund des Eintrages die Gesprächsverbindung sogleich an das GSM-Netzes zurückweisen, ohne den Teilnehmer innerhalb des intelligenten Netzes PSTN zu suchen. Wie weiter oben bereits diskutiert verringert dies den Aufwand an belegten Leitungen und die Gesprächsaufbauzeit mitunter beträchtlich.

Wenn das Endgerät DMH sich wieder in das GSM-Netz PLMN einbucht, findet wieder der weiter oben beschriebene Vorgang statt. An dieser Stelle sei nochmals darauf hingewiesen, daß die von dem Heimatregister HLR an die Dienststeuerstation SCP gesendete Erreichbarkeitsmeldung vorteilhafterweise die Löschung von Aufenthaltsinformationen sowie Anrufumleitungen in dem intelligenten Netz durch die Dienststeuerstation SCP auslöst, insoweit dies durch die Erreichbarkeit des Teilnehmers über das Mobilfunknetz PLMN erforderlich ist.

Es sei an dieser Stelle darauf hingewiesen, daß das erfindungsgemäße Verfahren für das GSM-Netz PLMN und das intelligente Netz PSTN nicht symmetrisch ist, bedingt durch die verschiedenartige Architektur der Netze. Weiters sei als vorteilhaft angemerkt, daß die Erfindung für seine Realisierung keine Änderung auf Seiten des Endgerätes DMH voraussetzt. So kann in dem obigen Ausführungsbeispiel ein bekanntes "Dual-Mode Handy" ohne weiteres verwendet werden.

Die Anrufzuordnung kann dadurch zusätzlich optimiert werden, daß dem Teilnehmer DMH eine einheitliche, netzübergreifende Rufnummer zugeordnet wird. Diese IN-Rufnummer ist dann in allen beteiligten Netzen gültig, und die ISDN- und MSISDN-Nummer werden lediglich für die netzinternen Umleitvorgänge verwendet.

Zur weiteren Verbesserung der Teilnehmer-Mobilität dient der Wechsel zwischen verschiedenen Endgeräten; dies ist unter dem Schlagwort 'private user mobility' (PUM) bekannt. So kann z.B. der Teilnehmer zusätzlich zu dem Dual-Mode Handy DMH über einen Telefon TEL verfügen, dem auch eine eigene Rufnummer zukommt. Wenn der Teilnehmer über das Telefon TEL erreichbar sein will, teilt er dies der Dienststeuerstation beispielsweise dadurch mit, daß er eine für diesen Zweck eingerichtete Servicenummer der Dienststeuerstation SCP wählt. Die Dienststeuerstation registriert den Anruf und erkennt das Telefon TEL als rufendes Endgerät. In der Dienststeuerstation SCP ist nun vermerkt, daß das Mobilgerät DMH und das Telefon TEL demselben Teilnehmer zugeordnet sind, sodaß die Endgeräte des Teilnehmers logisch wie ein Endgerät behandelt werden. In diesem Beispiel werden somit Anrufumleitungen von dem Mobilgerät DMH zu dem Telefon TEL gesetzt und auch eine entsprechende Aufenthaltsinformation betreffend des Telefons TEL an das GSM-Netz hinsichtlich des Mobilgerät DMH gesendet.

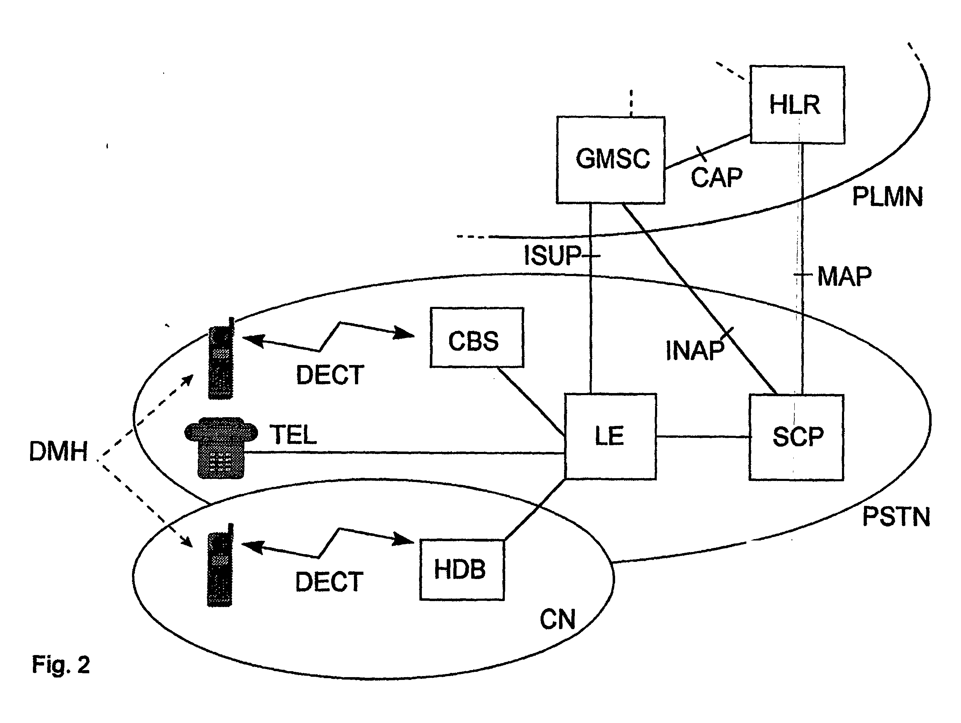

Das oben beschriebene und in Fig. 1 dargestellte Ausführungsbeispiel kann z.B. durch weitere Netze ergänzt werden, in denen der Teilnehmer erreichbar sein will. Dies können gleichberechtigte Netze sein, wie etwa andere GSM-Netze, die über das beschriebene GSM-Netz PLMN an der Erfindung teilhaben, oder untergeordnete Netze. Bei dem in Fig. 2 gezeigten gegenüber dem obigen Beispiel erweiterten Variante z.B. kann das Dual-Mode Handy DMH des Teilnehmers zusätzlich über ein firmeneigenes Privatnetz CN kommunizieren. Das Privatnetz CN ist ein Schnurlosnetz z.B. nach dem DECT-Standard. In dem Schnurlosnetz CN stellt die Hauptstation HDB Verbindungen über die Luftschnittstelle zu dem als Schnurlos-Mobilteil fungierenden Endgerät DMH entweder direkt oder über andere, in Fig. 1 nicht gezeigte Basisstationen her. Die Hauptstation HDB ist ihrerseits drahtgebunden mit einem Ortsamt LE eines Festnetzes PSTN (Public Service Telecommunication Network) verbunden. Dadurch hat das Privatnetz CN Verbindungsmöglichkeit zu den anderen Telekommunikationsnetzen. Innerhalb des Privatnetzes CN übernimmt weiters die Hauptstation HDB die Funktionen einer Dienststation, die gegenüber der Dienststeuerstation SCP des intelligenten Netzes dieser untergeordnet ist.

Bei einer Einbuchung des Endgerätes DMH in das GSM-Netz PLMN sendet die Dienststeuerstation SCP zusätzlich eine Erreichbarkeitsmeldung über das Ortsamt LE an die Schnurlosnetz-Hauptstation HDB. Die Hauptstation HDB des Privatnetzes CN löscht einerseits einen eventuell bestehenden Standorteintrag für das Privatnetz und setzt eine Anrufumleitung von der Privatnetznummer des Endgerätes auf die MSISDN-Nummer im GSM-Netz PLMN. Anrufe, die nun in dem Privatnetz CN für das Endgerät DMH hereinkommen, werden nun von der Hauptstation HDB als Anruf zu der MSISDN-Nummer behandelt und leitet die Verbindungsherstellung wie für einen gewöhnlichen Ruf einer GSM-Nummer ein. Hierbei unternimmt die Hauptstation HDB keine Rufversuche, also sogenanntes Paging, innerhalb des Schnurlosnetzes CN, was sich abermals in einem schnelleren Gesprächsaufbau vorteilhaft auswirkt.

Wechselt das Endgerät DMH dagegen in den Einzugsbereich des Privatnetzes CN über und bucht sich dort ein, geschieht dies nach bekannter Weise und die Hauptstation setzt die entsprechende Standortinformation innerhalb des Privatnetzes CN. Die Hauptstation leitet eine Erreichbarkeitsmeldung an die anderen Telekommunikationsnetze weiter. Bei einem in dem GSM-Netz PLMN hereinkommenden Anruf, der sich auf die ISDN-Nummer des Teilnehmers DMH bezieht, findet zufolge der Erfindung, wie bereits beschrieben, jedenfalls eine Anfrage der Übergangsvermittlung GMSC an die Dienststeuerstation SCP statt. Ist das Endgerät DMH als in dem Privatnetz CN erreichbar gekennzeichnet, erfolgt der weitere Gesprächsaufbau wie oben beschrieben über das Festnetz PSTN; eine Anfrage bei dem Heimatregister HLR entfällt, was sich in geringerem Signalisierungsaufwand vorteilhaft auswirkt. Wenn das Endgerät DMH in das GSM-Netz PLMN übergewechselt ist, so kann die Dienststeuerstation SCP aufgrund des erfindungsgemäßen Eintrages die Gesprächsverbindung des Anrufes sogleich an das GSM-Netzes zurückweisen, ohne das Gespräch wie bisher durch das Privatnetz CN durchreichen zu müssen, das unter Umständen ein erfolgloses und zeitaufwendiges Paging durchführt.

Weiters ist es möglich, daß die Entscheidung, in welchem Netz der Teilnehmer erreichbar ist, dem Endgerät DMH,TEL übertragen wird. Ein solches Endgerät ist dann mit einer zusätzlichen Überprüfungseinheit ausgerüstet, die in bestimmten, z.B. von dem Teilnehmer programmierbaren Zeitabständen überprüft, in welchen Mobil- und Festnetzen sich das Endgerät befindet, d.h. in welchen Einzugsbereichen es sich befindet, und dann aus den zur Verfügung stehenden Netzen eines auswählt und sich dort einbucht, falls es nicht schon eingebucht ist. Das Kriterium für die Netzauswahl kann z.B. die prinzipielle Bevorzugung eines Netzes über einem anderen sein, etwa eines DECT-Netzes über einem GSM-Netz, oder auch nach Kostengesichtspunkten erfolgen, wobei unter Umständen auch noch andere Faktoren herangezogen werden können, z.B. die Uhrzeit bei Tageszeit-abhängigen Tarifen.

Selbstverständlich kann jedes der oben beispielhaft erwähnten Telekommunikationsnetze PLMN, PSTN, CN durch ein Netz mit einer Datenbasis ersetzt sein; außerdem ist die Zahl der beteiligten Netze prinzipiell beliebig. Die genannten Netze sind jeweils für ihre Gruppe von Netzen repräsentativ. Allgemein betrifft die Erfindung die in den unabhängigen Ansprüchen beschriebenen, für den Fachmann realisierbaren Ausgestaltungsformen.

## Patentansprüche

1. Verfahren zur Verwaltung der Erreichbarkeit eines Teilnehmers in einem Telekommunikationssystem, bei welchem zwischen einem öffentlichen Mobilfunknetz (PLMN) und einem weiteren, intelligenten Netz (PSTN) über eine Schnittstelle (ISUP) Kommunikationsverbindungen herstellbar und in dem Mobilfunknetz (PLMN) ein Heimatregister (HLR) zur Speicherung von Erreichbarkeitsinformationen betreffend den Teilnehmer sowie in dem intelligenten Netz (PSTN) eine Dienststeuerstation (SCP) für die Steuerung von Diensten im intelligenten Netz (PSTN) einschließlich des Setzens und Überwachens von Anrufumleitungen vorgesehen sind, wobei ein von dem Teilnehmer genutztes Endgerät (DMH, TEL) sich in das Mobilfunknetz (PLMN) oder in das intelligente Netz (PSTN) einbucht und nach dem Einbuchen des Endgerätes eine Erreichbarkeitsmeldung, welche die Erreichbarkeit des Teilnehmers in dem jeweiligen Netz anzeigt, zwischen dem Heimatregister (HLR) und der Dienststeuerstation (SCP) ausgetauscht wird, sowie auf eine Erreichbarkeitsmeldung betreffend die Teilnehmererreichbarkeit in dem Mobilfunknetz (PLMN) hin die Dienststeuerstation (SCP) den Teilnehmer als über das Mobilfunknetz erreichbar kennzeichnet und für Anrufe, die in dem intelligenten Netz (PSTN) für den Teilnehmer ankommen, in Abhängigkeit von der Erreichbarkeitsmeldung Anruf-Umleitwege zu dem Mobilfunknetz (PLMN) setzt,
**dadurch gekennzeichnet,**
**daß** auf eine Erreichbarkeitsmeldung betreffend die Teilnehmererreichbarkeit in dem intelligenten Netz (PSTN) hin in dem Heimatregister (HLR) eine entsprechende Erreichbarkeitsinformation gesetzt wird.

2. Verfahren nach Anspruch 1,
**dadurch gekennzeichnet, daß** auf das Einlangen einer Erreichbarkeitsmeldung betreffend die Teilnehmererreichbarkeit in dem Mobilfunknetz (PLMN) bei der Dienststeuerstation (SCP) hin Kennzeichnungen des Endgerätes als in dem intelligenten Netz (PSTN) erreichbar gelöscht werden.

3. Verfahren nach Anspruch 1 oder 2,
**dadurch gekennzeichnet, daß** auf das Einlangen einer Erreichbarkeitsmeldung betreffend die Teilnehmererreichbarkeit in dem intelligenten Netz (PSTN) bei dem Heimatregister (HLR) hin Einträge betreffend den Teilnehmer in Besucherregistern (VLR) des Mobilfunknetzes (PLMN) gelöscht werden.

4. Verfahren nach einem der Ansprüche 1 bis 3,
**dadurch gekennzeichnet, daß** in dem intelligenten Netz (PSTN) Teilnehmerendanschlüsse zumindest zum Teil mit Hilfe von Schnurlostelefon-Verbindungen, insbesondere DECT-Verbindungen, realisiert werden.

5. Verfahren nach einem der Ansprüche 1 bis 4,
**dadurch gekennzeichnet, daß** in den Netzen (PLMN, PSTN) bereits bestehende Erreichbarkeitsinformationen und/oder Anruf-Umleitwege, die durch die Aktualisierung überholt wurden, gelöscht werden.

6. Verfahren nach einem der Ansprüche 1 bis 5,
**dadurch gekennzeichnet, daß** das Endgerät (DMH) in regelmäßigen Zeitabständen überprüft, in welchem Netz-Einzugsgebiet es sich befindet, und nach vorgebbaren Kriterien auf der Grundlage des Ergebnisses der Überprüfung sowie gegebenenfalls zusätzlicher Information, z.B. der Uhrzeit, entscheidet, ob und in welches Netz es sich einbuchen soll.

7. Verfahren nach einem der Ansprüche 1 bis 6,
**dadurch gekennzeichnet, daß** die Erreichbarkeitsmeldungen über eine Schnittstelle (MAP) zwischen dem Heimatregister (HLR) und der Dienststeuerstation (SCP) ausgetauscht werden.

8. Verfahren nach einem der Ansprüche 1 bis 7,
**dadurch gekennzeichnet, daß** auf das Einlangen einer Erreichbarkeitsmeldung bei der Dienststeuerstation (SCP) hin Erreichbarkeitsinformationen an der Dienststeuerstation (SCP) untergeordnete Dienststationen des intelligenten Netzes und/oder an Diensthauptstationen (HDB) von Telekommunikationsnetzen (CN), die dem intelligenten Netz (PSTN) untergeordnet sind, weitergeleitet und in diesen verarbeitet werden.

9. Telekommunikationssystem, bei welchem zwischen einem öffentlichen Mobilfunknetz (PLMN) und einem weiteren, intelligenten Netz (PSTN) über eine Schnittstelle (ISUP) Kommunikationsverbindungen herstellbar und in dem Mobilfunknetz (PLMN) ein Heimatregister (HLR) zur Speicherung von Erreichbarkeitsinformationen betreffend den Teilnehmer sowie in dem intelligenten Netz (PSTN) eine Dienststeuerstation (SCP) für die Steuerung von Diensten im intelligenten Netz (PSTN) einschließlich des Setzens und Überwachens von Anrufumleitungen vorgesehen sind, wobei ein von dem Teilnehmer genutztes Endgerät (DMH,TEL) dazu eingerichtet ist, sich in das Mobilfunknetz (PLMN) oder in das intelligente Netz (PSTN) einzubuchen, und zwischen dem Heimatregister (HLR) und der Dienststeuerstation (SCP) Erreichbarkeitsmeldungen, welche die Erreichbarkeit des Teilnehmers in einem der Netze anzeigt, übermittelbar sind, sowie die Dienststeuerstation (SCP) dazu eingerichtet ist, in dem intelligenten Netz (PSTN) auf eine Erreichbarkeitsmeldung betreffend die Teilnehmerreichbarkeit in dem Mobilfunknetz (PLMN) hin für Anrufe, die in dem intelligenten Netz (PSTN) für den Teilnehmer ankommen, in Abhängigkeit von der Erreichbarkeitsmeldung Anruf-Umleitwege zu dem Mobilfunknetz (PLMN) zu setzen,
**dadurch gekennzeichnet,**
**daß** das Heimatregister (HLR) dazu eingerichtet ist, auf eine Erreichbarkeitsmeldung betreffend die Teilnehmererreichbarkeit in dem intelligenten Netz (PSTN) hin eine entsprechende Erreichbarkeitsinformation zu setzen.

10. Telekommunikationssystem nach Anspruch 9,
**dadurch gekennzeichnet, daß** zwischen dem Heimatregister (HLR) und der Dienststeuerstation (SCP) eine Schnittstelle (MAP) vorgesehen ist, über die Erreichbarkeitsmeldungen austauschbar sind.

11. Telekommunikationssystem nach Anspruch 9 oder 10,
**dadurch gekennzeichnet, daß** in dem intelligenten Netz (PSTN) zumindest ein Teil der Teilnehmerendanschlüsse Schnurlostelefon-Verbindungen, insbesondere DECT-Verbindungen, sind.

12. Telekommunikationssystem nach einem der Ansprüche 9 bis 11,
**dadurch gekennzeichnet, daß** die Dienststeuerstation (SCP) dazu eingerichtet ist, auf das Einlangen einer Erreichbarkeitsmeldung hin Erreichbarkeitsinformationen an der Dienststeuerstation (SCP) untergeordnete Dienststationen des intelligenten Netzes und/oder Diensthauptstationen (HDB) von Telekommunikationsnetzen (CN), die dem intelligenten Netz (PSTN) untergeordnet sind, weiterzuleiten.

## Claims

1. Method for administration of the accessibility of a subscriber in a telecommunications system, in which communications links can be set up between a public mobile radio network (PLMN) and a further, intelligent network (PSTN) via an interface (ISUP), and a home location register (HLR) is provided in the mobile radio network (PLMN) for storage of accessibility information relating to the subscriber, arid a service control point (SCP) is provided in the intelligent network (PSTN) for controlling services in the intelligent network (PSTN), including the setting and monitoring of call forwarding operations, with a terminal (DMH, TEL) which is used by the subscriber registering in the mobile radio network (PLMN) or in the intelligent network (PSTN) and, once the terminal has registered, an accessibility message which indicates the accessibility of the subscriber in the respective network being interchanged between the home location register (HLR) and the service control point (SCP), and, in response to an accessibility message relating to the subscriber accessibility in the mobile radio network (PLMN), the service control point (SCP) identifying the subscriber as being accessible via the mobile radio network and setting call re-routing paths to the mobile radio network (PLMN) as a function of the accessibility message for calls which arrive in the intelligent network (PSTN) for the subscriber,
**characterized**
**in that**, in response to an accessibility message relating to the subscriber accessibility in the intelligent network (PSTN), appropriate accessibility information is set in the home location register (HLR).

2. Method according to Claim 1,
**characterized in that**, on receipt of an accessibility message relating to the subscriber accessibility in the mobile radio network (PLMN) identifications for the terminal as being accessible in the intelligent network (PSTN) are deleted in the service control point (SCP).

3. Method according to Claim 1 or 2,
**characterized in that**, on receipt of an accessibility message relating to the subscriber accessibility in the intelligent network (PSTN), entries relating to the subscriber in visitor location registers (VLR) for the mobile radio network (PLMN) are deleted in the home location register (HLR).

4. Method according to one of Claims 1 to 3,
**characterized in that** at least some subscriber terminations in the intelligent network (PSTN) are provided by means of cordless telephone links, in particular DECT links.

5. Method according to one of Claims 1 to 4,
**characterized in that** accessibility information and/or call re-routing paths which already exist in the networks (PLMN, PSTN) and which have been overtaken by the updating is/are deleted.

6. Method according to one of Claims 1 to 5,
**characterized in that** the terminal (DMH) checks, at regular intervals, the network base station area in which it is located and uses criteria, which can be predetermined, on the basis of the result of the check, and possibly on the basis of additional information, for example the time, to decide whether and in which network it should register.

7. Method according to one of Claims 1 to 6,
**characterized in that** the accessibility messages are interchanged via an interface (MAP) between the home location register (HLR) and the service control point (SCP).

8. Method according to one of Claims 1 to 7,
**characterized in that**, on receipt of an accessibility message at the service control point (SCP), accessibility information is passed to service points which are subordinate to the service control point (SCP) in the intelligent network and/or to main service points (HDB) for telecommunications networks (CN) which are subordinate to the intelligent network (PSTN), and is processed in them.

9. Telecommunications system, in which communications links can be set up between a public mobile radio network (PLMN) and a further, intelligent network (PSTN) via an interface (ISUP), and a home location register (HLR) is provided in the mobile radio network (PLMN) for storage of accessibility information relating to the subscriber, and a service control point (SCP) is provided in the intelligent network (PSTN) for controlling services in the intelligent network (PSTN), including the setting and monitoring of call forwarding operations, with a terminal (DMH, TEL) which is used by the subscriber being set up to register in the mobile radio network (PLMN) or in the intelligent network (PSTN), and accessibility messages, which indicate the accessibility of the subscriber in one of the networks, being able to be transmitted between the home location register (HLR) and the service control point (SCP), and the service control point (SCP) being set up to set call re-routing paths to the mobile radio network (PLMN), as a function of the accessibility message, in the intelligent network (PSTN) in response to an accessibility message relating to the subscriber accessibility in the mobile radio network (PLMN), for calls which arrive in the intelligent network (PSTN) for the subscriber,
**characterized**
**in that** the home location register (HLR) is set up to set appropriate accessibility information in response to an accessibility message relating to the subscriber accessibility in the intelligent network (PSTN).

10. Telecommunications system according to Claim 9,
**characterized in that** an interface (MAP) via which accessibility messages can be interchanged is provided between the home location register (HLR) and the service control point (SCP).

11. Telecommunications system according to Claim 9 or 10,
**characterized in that** at least some of the subscriber terminations in the intelligent network (PSTN) are cordless telephone links, in particular DECT links.

12. Telecommunications system according to one of Claims 9 to 11,
**characterized in that** the service control point (SCP) is set up for passing accessibility information to service points, which are subordinate to the service control point (SCP), in the intelligent network and/or to main service points (HDB) in telecommunications networks (CN) which are subordinate to the intelligent network (PSTN), on receipt of an accessibility message.

## Revendications

1. Procédé de gestion de la joignabilité d'un abonné au sein d'un système de télécommunication, dans lequel des communications peuvent être établies entre un réseau public de radiocommunication mobile (PLMN) et un autre réseau intelligent (PSTN), par l'intermédiaire d'une interface (ISUP), dans lequel un enregistreur de localisation nominal (HLR) est prévu dans le réseau de radiocommunication mobile (PLMN), pour la mémorisation d'informations de joignabilité de l'abonné, dans lequel un poste de pilotage des services (SCP) est prévu dans le réseau intelligent (PSTN), pour le pilotage de services au sein du réseau intelligent (PSTN), y compris pour la mise en place et la surveillance de transferts d'appels, un terminal utilisé par l'abonné (DMH, TEL) s'enregistrant dans le réseau de radiocommunication mobile (PLMN) ou dans le réseau intelligent (PSTN) et après l'enregistrement du terminal, un message de joignabilité, indiquant la joignabilité de l'abonné dans le réseau respectif est échangé entre l'enregistreur de localisation nominal (HLR) et le poste de pilotage des services (SCP) et à l'entrée d'un message de joignabilité de l'abonné au sein du réseau de radiocommunication mobile (PLMN), le poste de pilotage des services (SCP) identifie l'abonné comme étant joignable par l'intermédiaire du réseau de radiocommunication mobile et pour les appels entrant dans le réseau intelligent (PSTN) et destinés à l'abonné, il met en place des voies de transfert d'appels vers le réseau de radiocommunication mobile (PLMN), en fonction du message de joignabilité,
**caractérisé en ce que**,
à l'entrée d'un message de joignabilité concernant la joignabilité de l'abonné au sein du réseau intelligent, (PSTN), une information de joignabilité correspondante est mise en place dans l'enregistreur de localisation nominal (HLR).

2. Procédé selon la revendication 1,
**caractérisé en ce que**,
à l'entrée d'un message de joignabilité de l'abonné au sein du réseau de radiocommunication mobile (PLMN), des identifications du terminal comme étant joignable au sein du réseau intelligent (PSTN) sont effacées au poste de pilotage des services (SCP).

3. Procédé selon l'une quelconque des revendications 1 ou 2,
**caractérisé en ce que**,
à l'entrée d'un message de joignabilité concernant la joignabilité de l'abonné au sein du réseau intelligent (PSTN), des informations concernant l'abonné dans des enregistreurs de localisation visités (VLR) du réseau de radiocommunication mobile (PLMN) sont effacées à l'enregistreur de localisation nominal (HLR).

4. Procédé selon l'une quelconque des revendications 1 à 3,
**caractérisé en ce que**
des branchement terminaux d'abonnés sont réalisées au moins partiellement au sein du réseau intelligent (PSTN) à l'aide de liaisons téléphoniques sans fil, en particulier des liaisons DECT.

5. Procédé selon l'une quelconque des revendications 1 à 4,
**caractérisé en ce que**
des informations de joignabilité et/ou des voies de transfert d'appels déjà existantes dans les réseaux (PLMN, PSTN) et qui sont dépassées suite à la mise à jour sont effacées.

6. Procédé selon l'une quelconque des revendications 1 à 5,
**caractérisé en ce que**
le terminal (DMH) vérifie à intervalles réguliers dans quel secteur d'intégration il se situe et selon des critères prédéfinissables, sur la base du résultat de la vérification et le cas échéant sur la base d'informations supplémentaires, par exemple l'heure, il décide si et dans quel réseau il doit s'enregistrer.

7. Procédé selon l'une quelconque des revendications 1 à 6,
**caractérisé en ce que**
les messages de joignabilité sont échangées par l'intermédiaire d'une interface (MAP) entre l'enregistreur de localisation nominal (HLR) et le poste de pilotage des services (SCP).

8. Procédé selon l'une quelconque des revendications 1 à 7,
**caractérisé en ce que**,
à l'entrée d'un message de joignabilité au poste de pilotage des services (SCP), des informations de joignabilité sont transférées à des postes de services subordonnés au poste de pilotage des services (SCP) au sein du réseau intelligent et/ou à des postes de services principaux (HDB) de réseaux de télécommunication (CN) qui sont subordonnés au réseau intelligent (PSTN), lesdites informations de joignabilité étant traitées au sein de ces derniers.

9. Système de télécommunication, dans lequel des liaisons de communications peuvent être établies entre un réseau public de radiocommunication mobile (PLMN) et un autre réseau intelligent (PSTN), par l'intermédiaire d'une interface (ISUP), et un enregistreur de localisation nominal (HLR), destiné à mémoriser des informations de joignabilité de l'abonné est prévu dans le réseau de radiocommunication mobile (PLMN) ainsi qu'un poste de pilotage des services (SCP) destiné à piloter des services au sein du réseau intelligent (PSTN), y compris la mise en place et la surveillance de transferts d'appels dans le réseau intelligent (PSTN), un terminal utilisé par l'abonné (DMH, TEL), étant conçu pour s'enregistrer dans le réseau de radiocommunication mobile (PLMN) ou dans le réseau intelligent (PSTN) et afficher des messages de joignabilité concernant la joignabilité de l'abonné au sein de l'un des réseaux, pouvant être transmis entre l'enregistreur de localisation nominal (HLR) et le poste de pilotage des services (SCP), ainsi que pour les appels entrant au sein du réseau intelligent (PSTN) et destinés à l'abonné, le poste de pilotage des services (SCP) étant conçu pour mettre en place au sein du réseau intelligent (PSTN) des voies de transferts d'appels vers le réseau de radiocommunication mobile (PLMN), suite à un message d'information concernant la joignabilité de l'abonné au sein du réseau de radiocommunication mobile (PSTN) et en fonction du message de joignabilité,
**caractérisé en ce que**
l'enregistreur de localisation nominal (HLR) est conçu pour mettre en place une information de joignabilité au sein du réseau intelligent (PSTN), suite à l'entrée d'un tel message concernant la joignabilité de l'abonné.

10. Système de télécommunication selon la revendication 9,
**caractérisé en ce**
**qu'**une interface (MAP), par l'intermédiaire de laquelle des messages de joignabilité peuvent être échangés, est prévue entre l'enregistreur de localisation nominal (HLR) et le poste de pilotage des services (SCP).

11. Système de télécommunication selon l'une quelconque des revendications 9 ou 10,
**caractérisé en ce que**,
au sein du réseau intelligent (PSTN), au moins une partie des branchements terminaux de l'abonné correspond à des liaisons téléphoniques sans fil, en particulier des liaisons DECT.

12. Système de télécommunication selon l'une quelconque des revendications 9 à 11,
**caractérisé en ce que**,
à l'entrée d'un message de joignabilité, le poste de pilotage des services (SCP) est conçu pour transférer des informations de joignabilité à des postes de services du réseau intelligent qui sont subordonnés au poste de pilotage des services (SCP) et/ou à des postes de services principaux (HDB) de réseaux de télécommunication (CN) qui sont subordonnés au réseau intelligent (PSTN).
